Europäisches Patentamt

European Patent Office

Office européen des brevets

(19)

(11) Veröffentlichungsnummer: **0 126 360**
A2

# (12) EUROPÄISCHE PATENTANMELDUNG

(21) Anmeldenummer: 84105087.5

(22) Anmeldetag: 05.05.84

(51) Int. Cl.³: **B 60 C 9/00**

(30) Priorität: 18.05.83 DE 3318059

(43) Veröffentlichungstag der Anmeldung: 28.11.84
Patentblatt 84/48

(84) Benannte Vertragsstaaten: **AT BE DE FR GB IT LU NL
SE**

(71) Anmelder: **BAYER AG, Konzernverwaltung RP
Patentabteilung, D-5090 Leverkusen 1 Bayerwerk (DE)**

(72) Erfinder: **Ippen, Jakob, Dr., Schleiermacherstrasse 17,
D-5090 Leverkusen 1 (DE)**
Erfinder: **Stüttgen, Friedel, Albrecht-Dürer-Strasse 94,
D-5024 Pulheim (DE)**

(54) **LKW-Reifen für harte Beanspruchung.**

(57) Der LKW-Reifen für harte Beanspruchung ist mit ein bis
drei speziellen Textillagen (6) aus Polyester ausgerüstet, die in
einer alterungsbeständigen Mischung eingebettet sind.

0126360

BAYER AKTIENGESELLSCHAFT     5090 Leverkusen, Bayerwerk

Konzernverwaltung RP
Patentabteilung                 KR/bc/c

**1 7. Mai 1983**

## LKW-Reifen für harte Beanspruchung

Die Erfindung betrifft einen LKW-Reifen für harte Beanspruchungen, bestehend aus Lauffläche, Gürtel, Karkasse, Fuß, Drahtkern und weiteren Elementen.

Die heute üblichen LKW-Radialreifen besitzen als Festigkeitsträger einen Stahlkordgürtel aus 3 bis 5 wechselnd gekreuzt angeordneten Gürtellagen und einer axial verlaufenden Stahlkord-Karkasse. Wegen der hohen Festigkeit des Stahlkords erfüllt diese Karkasse unter normalen Fahrbedingungen viele der ihr gestellten Aufgaben, insbesondere sorgt sie für die sichere Verbindung der Lauffläche mit dem Fuß, für einen geringen Rollwiderstand aufgrund der konstrukti⁻ nur erforderlichen dünnen Seitenwand und für eine einwandfreie Verankerung im Fuß.

Als Nachteile sind dagegen zu erwähnen, daß für eine einwandfreie Gummi-Metall-Bindung nur Haftmischungen verwendet werden können, die 7,0 Teile Schwefel enthalten. Solche Mischungen neigen aber im Dauerbetrieb

Le A 22 389

zur Reversion und besitzen deshalb nur eine beschränkte Alterungsbeständigkeit. Hinzu kommt noch, daß auch bei guter Gummi-Metall-Haftung durch die Dauerbewegung eine Reibung der einzelnen Filamente aufeinander stattfindet, die unter dem Begriff "Fretting" bekannt ist und die Festigkeit des Stahlkords erheblich schwächt, so daß im Extremfall die Festigkeitswerte bis zu 50 % abnehmen können. Ein weiteres Problem besteht in der Rostbildung des Stahlkords, welche durch das Eindringen von Feuchtigkeit und Sauerstoff zusätzlich gefördert wird.

Es hat deshalb nicht an Versuchen gefehlt, einen Stahlgürtel mit Textilkarkasse aus Reyon zu kombinieren. Um aber die gleiche Festigkeit zu erzielen, mußten bis zu 10 Textillagen übereinander angeordnet werden, was dann beim späteren Gebrauch wegen der dabei zwangsläufig auftretenden unterschiedlichen Spannungsverteilung in den einzelnen Lagen zu vorzeitigen Defekten und Brüchen in dem Reifen geführt hat. Ein weiterer Nachteil ist der hohe Rollwiderstand, der bedingt ist durch die große Zahl von Textillagen und damit zwangsläufig dicke Seitenwand.

Der Erfindung liegt die Aufgabe zugrunde, eine alterungsbeständige, nicht-rostende Karkasse mit niedrigem Rollwiderstand zu finden, die neben einer guten Haftung zwischen Kord und Gummimischung eine Verstärkung mit ausreichender Festigkeit besitzt und sicher im Fuß eingebunden ist, wobei die Lösung sowohl vom Einsatzmaterial als auch von der Herstellung sich in wirtschaftlich gegebenen Grenzen bewegen muß.

<u>Le A 22 389</u>

Die Aufgabe wird erfindungsgemäß dadurch gelöst, daß die Karkasse aus 1 bis 3 Textillagen aus Polyester - eingebettet in einer alterungsbeständigen Haftmischung - besteht.

Für den Fachmann ist es überraschend, daß es im Gegensatz zur bisherigen Auffassung der Fachwelt möglich ist, auch einem LKW-Reifen mit hoher Traglast und außergewöhnlicher Beanspruchung durch wenige Textillagen aus Polyester die notwendige Festigkeit zu geben. Durch die intensive Verbindung von Textilkord und alterungsbeständiger Mischung ist der Reifen unempfindlich gegen stoßartige Beanspruchung, zumal durch Restdehnung des Textilkords eine zusätzliche Elastizität hierfür genutzt werden kann. Wegen der wenigen Lagen ist auch die Dicke der Seitenwand und damit der Rollwiderstand gering. Durch das niedrige Gewicht des Textilkords im Verhältnis zum Stahl wird das Reifengewicht reduziert, was sich günstig auf die Fahreigenschaften auswirkt. Auch ist ein Rosten bzw. Fretting beim Textilkord nicht möglich. Ferner läßt sich ein Reifen mit Textillagen einfach herstellen.

In einer besonderen Ausführungsform sind die Enden der Karkasse durch Schutzstreifen aus alterungsbeständiger Haftmischung verankert.

Durch die alterungsbeständige Haftmischung bleibt auch bei Heat-built-up die sichere Verankerung der Karkasse erhalten. Sonst übliche Verstärkungen durch Stahl- oder Textilkord sind nicht erforderlich. Der Bau des Reifens

Le A 22 389

0126360

wird dadurch vereinfacht, was insbesondere auch bei Runderneuerungen von Vorteil ist.

In einer weiteren Ausführungsform ist als Textillagen ein Polyesterkord (Drehung 100 bis 180 Z bzw. S) mit einer Festigkeit von mindestens 60 daN mit einer Bezugsdehnung von 1 % bei 10 daN bzw. 4,7 % bei 40 daN und einer Schrumpfung von max. 2,2 % bei 150°C Heißluftbeaufschlagung eingebaut.

Dieser preiswerte Polyesterkord, der bisher noch nicht für Reifen verwendet wurde, zeigt eine erstaunliche Festigkeit, so daß nur wenige Textillagen zur Erzielung der notwendigen Festigkeit erforderlich sind.

In einer möglichen Ausführungsform enthält die alterungsbeständige Haftmischung 40 bis 80 Gew.-Teile, insbesondere 50 bis 70 Gew.-Teile, Zinkoxid und weniger als 4 Gew.-Teile Schwfel, jeweils bzeogen auf 100 Gew.-Teile Kautschuk.

Der Ersatz von großen Mengen Füllstoffen wie Ruß durch Zinkoxid erhöht erstaunlicherweise die Rückprallelastizität, wodurch die Wärmeentwicklung verringert wird. Gleichzeitig wird durch den geringen Schwefelgehalt die Gefahr einer Reversion der vulkanisierten Gummimischung herabgesetzt, so daß insgesamt die Alterungsbeständigkeit der Haftmischung dadurch wesentlich verbessert wurde. Dies zeigt die Kugelzermürbungsprobe, bei der eine Kugel (∅ 30 mm) aus der Prüfmischung zwischen zwei gegenüberliegenden Rillen ( < 120°) unter

Le A 22 389

Belastung bis zu 10 000 mal in einer vorgegebenen Zeit umgewalzt wird. Die Temperaturen die dabei entstehen liegen mehr als 30 % unter den Werten von Vergleichsproben, die zur Zeit für Karkassen verwendet werden.

In einer Ausführungsform besteht die alterungsbeständige Haftmischung aus einem mit Resorcin-Formaldehyd-Kieselsäure-Haftsystem versetztem Chlorbutadien-Kautschuk.

Durch die Verwendung von Chlorbutadien-Kautschuk in Kombination mit einem Haftvermittler kann eine intensive Haftung zum Kord erzielt werden. Da dieser Kautschuk kaum Schwefel als Vernetzer benötigt ( $\leq$ 0,3 Gew.-Teile) ist die Mischung unempfindlich gegen Zersetzung bei Hitzebildung, so daß hier eine Haftmischung mit hoher Alterungsbeständigkeit vorliegt. Wie eine Prüfung zeigt, treten bei einer Heißluftbeaufschlagung von 100°C nach 7 Tagen bei Bruchdehnung, Härte und Stoßelastizität keine Verschlechterung der Ausgangswerte ein. Sogar der Abfall der Zugfestigkeit beträgt nicht mehr als 10 bis 20 %. Diese guten Ergebnisse sind bei weitem nicht mit den bisher eingesetzten Mischungen zu erzielen.

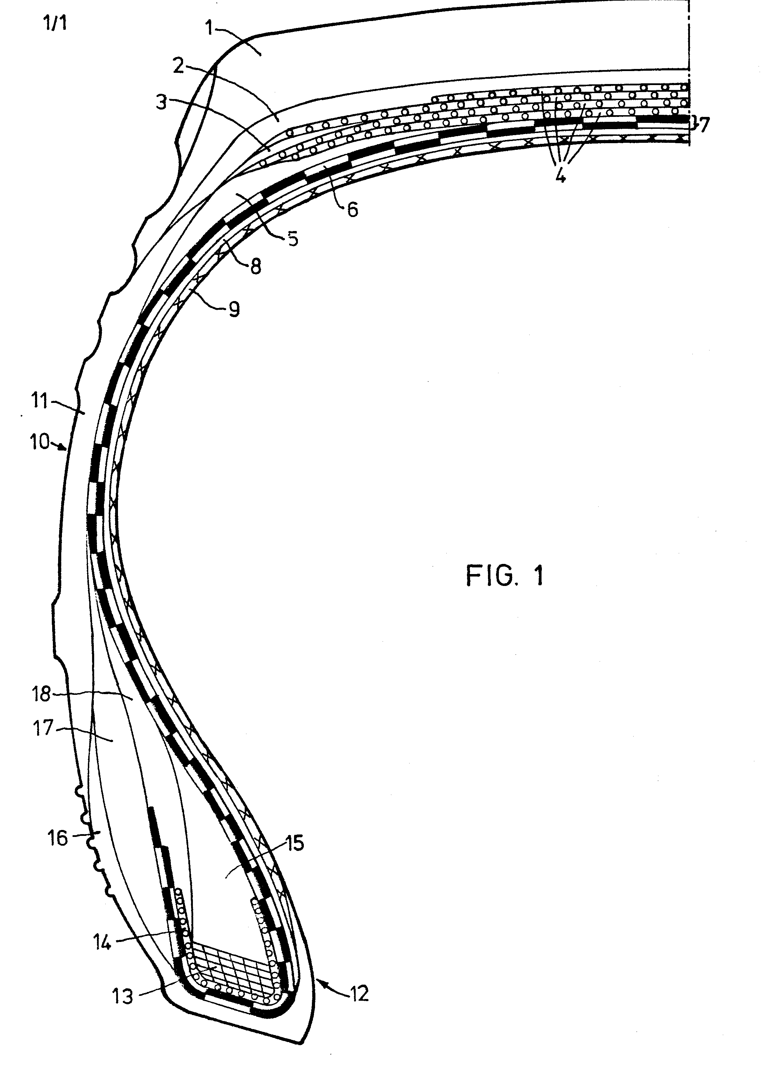

Ein Beispiel der Erfindung ist in der Zeichnung dargestellt und wird im folgenden näher beschrieben. Die Fig. 1 zeigt einen

LKW-Reifen mit Textilkarkasse und schwefelfreier Verstärkung

Le A 22 389

In Fig. 1 ist eine Lauffläche 1 mit Undertread 2 und Gürtelkeil 3 gezeigt, unter der ein vierlagiger Stahlgürtel 4 angeordnet ist, welcher wiederum unter Zwischenlage von seitlich angeordneten Schulterpolstern 5 mit den zwei Textillagen 6 aus Polyester in der Karkasse 7 verbunden ist, die nach innen mit einer Innenplatte 8 und schließlich einer Tublessplatte 9 abgedeckt ist. Bei der Seitenwand 10 ist auf der Karkasse 7 ein Seitenteil 11 nach außen vorgebaut.

Der Fuß 12 besteht aus dem Drahtkern 13 mit Kernumhüllung 14, Drahtkappe 15, Humpstreifen 16, Flankenstreifen 17 und Wulststreifen 18. Der Kord aus Polyester ist einer Zinkoxid enthalten Haftmischung mit geringem Schwefelgehalt eingebettet.

Für die Verankerung der Karkasse wurde ein Chlorbutadien-Kautschuk mit Resorcin-Formaldehyd-Kieselsäure-Haftsystem eingesetzt.

Le A 22 389

Beispiel

Für einen schweren LKW-Reifen 15-18 R 22,5 werden folgende Materialien eingesetzt:

| | |
|---|---|
| Polyester-Kord dtex | 1100/3f/3f/3f |
| Drehung | 100 Z/150 S/70 Z |
| Festigkeit | 194 daN |
| Fadendurchmesser | 2,3 mm |
| Bezugsdehnung bei 30 daN | 1,5 % |
| Bezugsdehnung bei 50 daN | 3,0 % |
| Bezugsdehnung bei 100 daN | 5,1 % |
| Heißluftschrumpf bei 150°C | 2,2 % |
| Längengewicht gr/100 m | 338 gr/100 m |

Die Rezeptur der schwefelhaltigen Mischung lautet:

| | |
|---|---|
| Naturkautschuk | 100.0 |
| Zinkoxid | 40.0 |
| Zinkoxyd aktiv | 20.0 |
| Ruß | 35.0 |
| N-Isopropyl-N'-phenyl-p-phenylen-diamin | 1.0 |
| 2,2,4-Trimethyl-1,2-dihydrochinolin | 0.5 |
| gefällte Kieselsäure | 8.0 |
| Schwefel | 3.6 |
| Benzothiazyl-2-cyclohexylsulfenamid | 0.7 |
| Dibenzothiazyldisulfid | 0.3 |
| Resorcin-Stearinsäure-Gemisch | 1.2 |
| Formaldehyd-Kieselsäure-Gemisch | 1.6 |
| N-Cyclohexylthiophthalimid | 0.2 |
| | 212.10 |

Le A 22 389

| | |
|---|---|
| Mischungsplastizität (DH/DE) | 450/12 |
| Mooney-Plastizität (ML 4) | 25.0 |
| Mooney-scorch time (5 ME/120°C) | 18.5 |
| Dichte (g/cm$^3$) | 1.37 |
| Vulkanisation (min/150°C) | 10 |
| Zugfestigkeit (MPa) | 17.1 |
| Bruchdehnung (%) | 480 |
| Spannungswert 100 % (MPa) | 2.6 |
| Spannungswert 300 % (MPa) | 9.9 |
| Weiterreißfestigkeit (N/4 mm) | 190 |
| Härte bei 20/70°C (Shore A) | 63/- |
| Elastizität 20/70°C (%) | 71/- |

(normale Mischung 30 %)

Als Verstärkungen wurden eingesetzt:

| | |
|---|---|
| Chlorbutadien-Kautschuk | 100.0 |
| Polyubtadien-Kautschuk | 3.0 |
| Stearinsäure | 3.0 |
| Magnesiumoxid | 4.0 |
| Diphenylamin-Derivat | 2.0 |
| N-(1,3-Dimethylbutyl)-N-phenyl-p-phenylendiamin | 1.0 |
| gefällte Kieselsäure | 10.0 |
| Ruß | 25.0 |
| aromatischer Polyether | 5.0 |
| Zinkoxid | 5.0 |
| Schwefel | 0.5 |
| Formaldehyd-Kieselsäure-Gemisch | 4.6 |
| Resorcin-Derivat-Gemisch | 8.0 |
| | 171.1 |

Le A 22 389

| Defo-Härte/-Elastizität 80°C | 875/20 |
| Mooney-Viskosität ML 4/100°C | 59 |
| Anvulkanisationszeit b. 120°C (Minimum + 5 Punkte) (min) | 11 |
| Wulkanisationsprüfung mit Bayer-Frank-Vulkameter b. 150°C Umsatzzeit $t_{90}$ (min) | 38 |

Mechanische Werte:

| Vulkanisationszeit (min) | 20 |
| Festigkeit (MPa) | 16.6 |
| Bruchdehnung (%) | 475 |
| Spannung bei 100 % Dehnung (MPa) | 3.1 |
| Spannung bei 300 % Dehnung (MPa) | 10.1 |
| Härte (Shore A) | 73 |
| Stoßelastizität (%) | 38 |
| Weiterreißwiderstand (N) | 157 |
| Dichte (g/cm$^3$) | 1.38 |

Um die Funktionstüchtigkeit der beschriebenen Reifen zu erproben, wurden Reifenversuche in der Dimension 11 R 22,5 16 PR angesetzt. Der Versuch umfaßte 2 Test-arten:

1. Wulsttest mit abgeschälter Lauffläche auf dem Prüfstand

| Prüftrommel ∅ | 1592 mm | Raumtemperatur 30°C |
| Geschwindigkeit | 45 km/h | |
| Innendruck | 9 bar | |
| Belastung | 5000 kp | |

Le A 22 389

## 2. Dauerlauftest

| | |
|---|---|
| Prüftrommel Ø | 1592 mm    Raumtemperatur 30°C |
| Geschwindigkeit | 60 km/h |
| Luftdruck | 7 bar |
| Belastung | beginnend mit 2700 kp |
| | Lasterhöhung alle 24 h um 300 kp, bis zur Zerstörung des Reifens |

Um die Alterungsbeständigkeit zu überprüfen, wurde je Testart sowohl Neureifen als auch Reifen überprüft, die bereits 80 000 Straßen-km zurückgelegt hatten. Die Testergebnisse sind in der nachfolgenden Tabelle zusammengestellt:

| Testart | 1 E Stahl-Karkasse / 4 E Stahl-Gürtel | | 2 E Polyester-Karkasse / 4 E Stahl-Gürtel | |
| --- | --- | --- | --- | --- |
| | 1E Stahl-Wulstband | 3E Nylon-Wulstband | 3E Nylon-Wulstband | ohne Wulstband mit Spezial-misch. im Fuß u. Undertread |
| Wulsttest Neureifen | 126 h WS | 196 h WS | 280 h WS | 240 h WS |
| Wulsttest nach 80.000 km Straße | 100 h WS | 140 h WS | 201 h WS | 188 h WS |
| Dauerlauftest Neureifen | 156 h GS | 160 h GS | 164 h GS | 160 h GS |
| Dauerlauftest nach 80.000 km Straße | 146 h GS | 150 h GS | 150 h GS | 150 h GS |

WS = Wulstseparation      GS = Gürtelseparation

Le A 22 389

Le A 22 389

Die vorseitig aufgeführte Zusammenfassung aller Testergebnisse zeigt, daß der Reifen in allen Belastungskriterien den in gleicher Form gefertigten Ganzstahlreifen beim Dauerlauftest ebenbürtig und im Wulsttest
überlegen ist.

Le A 22 389

Patentansprüche

1) LKW-Reifen für harte Beanspruchungen, bestehend aus Lauffläche, Gürtel, Karkasse, Fuß, Drahtkern und weiteren Elementen, dadurch gekennzeichnet, daß die Karkasse (7) aus 1 bis 3 Textillagen (6) aus Polyester - eingebettet in einer alterungsbeständigen Haftmischung - besteht.

2) LKW-Reifen nach Anspruch 1, dadurch gekennzeichnet, daß die Enden der Karkasse (7) durch Schutzstreifen (17,18) aus alterungsbeständiger Haftmischung verankert sind.

3) LKW-Reifen nach Anspruch 1, dadurch gekennzeichnet, daß als Textillagen (6) ein Polyesterkord (Drehung 100 bis 180 Z bzw. S) mit einer Festigkeit von mindestens 60 daN bei einer Bezugsdehnung von 1 % bei 10 daN bzw. 4,7 % bei 40 daN und einer Schrumpfung von max. 2,2 % bei 150°C Heißluftbeaufschlagung eingebaut ist.

4) LKW-Reifen nach Ansprüchen 1 bis 3, dadurch gekennzeichnet, daß die alterungsbeständige Haftmischung 40 bis 80 Gew.-Teile, insbesondere 50 bis 70 Gew.-Teile, Zinkoxid und weniger als 4 Gew.-Teile Schwefel, jeweils bezogen auf 100 Gew.-Teile Kautschuk, enthält.

5) LKW-Reifen nach Ansprüchen 1 bis 3, dadurch gekennzeichnet, daß die alterungsbeständige Haftmischung aus einem mit Resorcin-Formaldehyd-Kieselsäure-Haftsystem versetztem Chlorbutadien-Kautschuk besteht.

Le A 22 389

FIG. 1